# EUROPEAN PATENT APPLICATION

(11) **EP 1 005 896 A1**
(43) Date of publication of application: **07.06.2000**
(21) Application number: 99921153.5
(22) Date of filing: 06.05.1999
(51) Int. Cl.: B01D 63/02

(54) **HOLLOW FIBER TYPE MEMBRANE MODULE**

(30) Priority: 14.05.1998 JP 13199398; 22.05.1998 JP 14169098
(71) Applicant: Daicen Menbrane-Systems Ltd, Osaka 590-0905 (JP)
(72) Inventor: HASEGAWA, Takayoshi, Sakai-shi, Osaka 590-0012 (JP); MATSUMOTO, Yoshitada, Sakai-shi, Osaka 590-0018 (JP)
(74) Representative: Sama, Daniele, Dr.
(86) International application number: JP9902387
(87) International publication number: WO9958231

(57) **Abstract**

A hollow fiber type membrane module M comprises a cartridge element 2 in which a bundle of hollow fiber type membranes is set in a cylindrical case having a plurality of the pervious holes 5, 5, ... to water and both end parts of the bundle of hollow fiber type membranes are fixed with a bonding resin within the cylindrical case, and a cylindrical housing (shell 1) for setting therein the cartridge element liquid-tightly, has a detachable cap structure for replacement of the cartridge element and is provided with a fluid outlet/inlet port at least at one position. The pervious holes to water of the cylindrical case are positioned not directly beneath but apart from an inner surface of the fluid outlet/inlet port of the cylindrical housing.

## Description

### FIELD OF INVENTION

The present invention relates to a hollow fiber-type membrane module in which a hollow fiber-type membrane element is set replaceably in a housing, which is mainly used not only for production processes such as separation, concentration, refinement and the like of pharmaceuticals, enzymes, fermented products, various kinds of food and the like, but also for water treatment such as purifying, refining or obtaining a bacterio-free state of surface water, groundwater, water for industrial use and the like, and in the field of water treatment related to various types of waste water.

### BACKGROUND ART

Hollow fiber type membrane modules are used in extremely wide fields such as water treatment, gas separation, pervaporization separation or the like as well as in processes of pharmaceutical and food industries because they have a larger effective membrane area per unit volume as compared with flat, spiral and tubular membrane modules. As regards the structure of hollow fiber type membrane modules, widely used, in general, are modules in which a bundle of plural hollow fiber type membranes is set in a cylindrical housing made of plastic for supporting the bundle, both end parts of the bundle are sealed integrally with the housing by bonding with a resin such as epoxy resin, polyurethane or the like, and then resin-bonded portions at both ends are partially cut off to open end parts of the hollow fibers.

However, a module whose hollow fibers and housing are integrally bonded has the problem that if the hollow fibers are clogged or deteriorated, the module, i.e., both the hollow fibers and the housing, must be disposed of and replaced with a new module even if the housing is still in a sufficiently usable state. Reversely, if the housing becomes unusable because of breakage or the like while the hollow fibers are still in a usable state, the same problem occurs.

For this reason, proposed is a hollow fiber type membrane module in which a hollow fiber type membrane element (cartridge) is replaceably set in a housing. In this system, the cartridge-type hollow fiber type membrane element is readily separated from the housing. Therefore, if a problem arises with either one of the hollow fiber type membrane element and the housing, it is possible to continue to use the module by replacing only said one of them.

As separation membrane modules in which such membrane cartridges are set in detachable housings, various types of modules have already been proposed and are in use. However, not often used are modules wherein membranes having a separating function are hollow fiber-form membranes which have a highly enhanced separating function on the order of sub-micron or smaller such as micro-filtration membranes and ultra-filtration membranes and which have a large effective membrane area per unit volume.

So far, in a hollow fiber type membrane module in which a bundle of hollow fiber type membranes whose end parts are sealed with resin is set in a housing having an outlet/inlet port for fluid on its side wall, the fluid outlet/inlet port on the circumferential face of the housing is usually used for taking permeate out of the housing in the case of a module of an internal-pressure mode. But, sometimes, a so-called backward flow washing is conducted for the purpose of washing fouling off the membranes. In the backward flow washing, fluid such as permeate is flown in by pressure backward from the outlet/inlet port so that filtration in a reverse direction to a usual one is performed through the hollow fiber type membranes. During this backward flow, the force of fluid flow acts on the bundle of hollow fiber type membranes to bend or move the bundle of hollow fiber type membranes. Thereby, the hollow fiber type membranes are broken from the boundary face between the bundle of hollow fiber type membranes and the resin-sealed portion in some cases. Where the breakage of the hollow fiber type membranes takes place, treated liquid leaks into a permeate side, which results in disadvantages.

In order to solve this problem, Japanese Patent Laid-Open Nos. 158103/1988 and 144709/1987 propose an annular member and an annular projection for protection of hollow fiber type membranes. However, since the annular member/ projection encircles the bundle of hollow fiber type membranes, there is more vacancy in a case, which spoils compactness of the hollow fiber type membrane module. Also, since a projecting portion contacts hollow fibers directly, the hollow fiber type membranes may be damaged. Further, Japanese Patent Laid-Open No. 206468/1996 proposes a hollow fiber type membrane protection plate for protecting hollow fiber type membranes, which is surely superior in compactness to the above-mentioned two publications. However, since these proposals including the aforementioned two publications all use the proposed members as protective components, the number of components increases and the construction and structure of modules are complicated. That is one cause of rise in the unit cost of a module.

On the other hand, Japanese Patent Publication No. 54405/1991 discloses a specific cartridge- type hollow fiber type membrane module, for example. In this publication, described is the sealing of a bundle of hollow fibers with a case (housing) setting it therein to avoid leakage or mixture of fluid, as an important technical problem of cartridge-type hollow fiber type membrane modules. It also describes, as prior arts for this purpose,
(1) a method of disposing a solid stem at the center of a bundle of hollow fibers and applying a necessary force to a sealed portion from this stem,
(2) a method of setting a bundle of hollow fibers in a strong sheath (a cylindrical case for a cartridge element) and applying a necessary force to a sealed portion from this case,
   and mentions, as means for solving a problem that these prior arts have,
(3) a method of fixing bonded portions (resin) at both ends of a cartridge element with a fixing member.

However, in all these prior arts, the cylindrical case (sheath) of the cartridge element for setting the bundle of hollow fibers is inserted in a housing, and the housing and the cartridge element are sealed by the bonded portions at both ends. Therefore, high precision is required in the size and finishing of the bonded portions at both ends for ensuring sealing properties, and further, needed are work and particular production apparatus for realizing that. Especially, since the housing and the cartridge element set in the housing are each constructed to be substantially symmetric in a longitudinal direction, there is a certain degree of freedom in that the cartridge element can be inserted from either end of the housing, but this very advantage in turn makes it difficult to ensure the sealing properties. More particularly, since a sealing member is made to intervene not between a cap portion and a peripheral face of the cartridge element but between the cap portion and an end face of the cartridge element, it is difficult to hold the sealing member at a predetermined position and good sealing properties may not be ensured.

One the other hand, Japanese Utility Model Laid-Open NO. 26326/1991 proposes a method of sealing the housing and the cartridge element with use of a sealing member attached to the outside of a cylindrical case of the cartridge element. In this method, a cartridge element in which both end parts of a bundle of hollow fibers are sealed integrally with a porous cylinder by bonding with resin and thereafter resin-bonded portions at both ends are cut to open end parts of the hollow fibers is set in a housing, one cap of which is detachable. The housing and the cartridge element are sealed using a sealing member attached to grooves formed on the periphery of the cartridge element.

Accordingly, the retention of the sealing member can be ensured. But in this module, since only one cap of the housing is detachable, the module is assembled by inserting the cartridge element into the housing from an opening made by removing the cap and then attaching the cap to the housing. Accordingly, in this method, there is a problem in that a detachable portion of the housing is only on one side and the cartridge element is attached and removed only from said one direction. That is, the detachable cap cannot be disposed only in a direction where a space can be ensured for replacing the cartridge element. Also the cartridge element can be checked only from the side of the detachable cap or by taking the entire cartridge element out of the housing. Thus, there are restrictions in use of the module and in designing the module.

One major object of the present invention is to provide an inexpensive, reliable hollow fiber type membrane module whose structure is simplified and whose production is facilitated by using the cartridge case itself also for protecting hollow fibers and reducing the number of components.

Another major object of the present invention is to provide an inexpensive, reliable hollow fiber type membrane module whose assembly and inspection are easy, which is hardly restricted with regard to how and where to place it, and which is low-priced and excellent in sealing properties and allows repeated use of the housing.

Intensive study on the above-described problems about hollow fiber type membrane modules has resulted in the findings that, in a cartridge-type hollow fiber type membrane module wherein a cartridge element including a bundle of hollow fibers set in a cylindrical case with a pervious hole to water, both ends of the bundle being fixed with resin inside the case, is inserted liquid-tightly in a cylindrical housing having a detachable cap structure and having a fluid inlet/outlet port at least at one place, it is possible to use the cylindrical case of the cartridge also for protection of hollow fibers, to obtain a low-priced, highly reliable cartridge-type hollow fiber type membrane module whose structure is simplified and whose production is facilitated, if the pervious hole to water of the cylindrical case of the cartridge element inserted in the cylindrical housing is not located directly under a fluid inlet/outlet port provided on a circumferential face of the cylindrical housing, and has led to the present invention.

That is, the present invention is a hollow fiber type membrane module comprising: a cartridge element in which a bundle of hollow fiber type membranes is set in a cylindrical case with a plurality of pervious holes to water and both end parts of the bundle of hollow fiber type membranes are fixed with a bonding resin within the cylindrical case; and a cylindrical housing for setting therein the cartridge element liquid-tightly, the housing having a detachable cap structure for replacement of the cartridge element and having a fluid outlet/inlet port at least at one position, the hollow fiber type membrane module being constructed so that the pervious holes to water in the cartridge element are positioned not directly beneath but apart from an inner surface of the fluid outlet/inlet port of the cylindrical housing.

Further, the inventors of the present invention have found that the effect of the present invention can be further enhanced by providing a pervious hole to water in the vicinity of the boundary between a resin-bonded (sealed) portion of the cylindrical case and the bundle of hollow fibers to minimize a dead space such as a fluid puddle, in addition to the above-described structure wherein none of the pervious holes to water of the cylindrical case of the cartridge element inserted in the housing are located directly under the fluid inlet/outlet port provided on the circumferential face of the housing. Further, the inventors have found that it is possible to easily and positively determine the positions of the liquid outlet/inlet port of the cylindrical housing and the pervious holes to water of the cartridge element by providing an end portion of the cartridge element with a mark indicating a necessary distance from a pervious hole to water or the midway point between the pervious holes to water and by composing a liquid-tight sealing portion of the cartridge element with use of a detachable cap section, that is, by allowing the existence of the mark of the cartridge element outside the cylindrical housing.

In the cartridge-type hollow fiber type membrane module according to the present invention, the cartridge element in which both end parts of the bundle of hollow fiber type membranes set in the cylindrical case having the pervious holes to water are fixed with a resin within the cylindrical case is inserted liquid-tightly in the housing having the detachable cap structure. It is good enough that the cylindrical case has pervious holes to water capable of passing through permeate passed through the hollow fiber type membranes or an original liquid supplied to the hollow fiber type membranes smoothly. Desirably, resistance to passing liquid is reduced as much as possible so long as the strength of the case is not impaired, in order that an effective inter-membrane differential pressure can be applied to the hollow fiber type membranes. For example, used is a plastic case having a large number of circular holes formed thereon. Both end parts of the bundle of hollow fiber type membranes set in the cylindrical case are formed by means generally carried out as a method of forming end faces of hollow fibers of hollow fiber type membrane modules, according to which both end parts are sealed by boding integrally with the case using a hardening resin such as epoxy, urethane or the like and thereafter remote edge parts of resin-bonded portions at both ends are cut off to open the end parts of the hollow fibers.

In the present invention, the pervious holes to water of the cylindrical case of the cartridge element are located not beneath but apart from the inner surface of the fluid outlet/inlet port on the circumferential face of the cylindrical housing. In order to realize such location, the distances between the pervious holes to water in a circumferential direction and in an axial direction of the cartridge case may each be 1.2 or more times larger than the inner diameter of the fluid outlet/inlet port on the circumferential face of the housing. Further, a pervious hole to water of the cartridge element that is the nearest to a point just under the center of the fluid outlet/inlet port of the cylindrical housing may be spaced from the point a distance 0.6 or more times longer than the inner diameter of the fluid outlet/inlet port of the cylindrical housing. Incidentally, in the case where the pervious holes to water of the cylindrical case are arranged in pairs of holes adjacent in the circumferential direction, the distance of pervious holes to water in the axial direction and the distance of a pair of pervious holes to water and another pair of pervious holes to water adjacent to said pair in the circumferential direction (i.e., a longer distance of pervious holes to water in the circumferential direction) may be set to 1.2 or more times longer than the inner diameter of the fluid outlet/inlet port.

Accordingly, a portion of the cylindrical case where pervious holes to water are not opened is located immediately under the fluid outlet/inlet port on the circumferential face of the cylindrical housing and serves as a hollow fiber protecting plate which prevents damages on hollow fiber type membranes by vibration caused by liquid flow from/toward the fluid outlet/inlet port of the housing. Thus, it is possible to realize an inexpensive, reliable cartridge-type hollow fiber type membrane module which has a decreased number of components used for protection of hollow fibers and a simplified module structure and at the same time is easy to produce. Further, as regards the outermost pervious hole to water of the cartridge element in the axial direction, its outermost opening edge may be arranged on the inside edge of the resin-bonded portion of the cartridge element, that is, said pervious hole to water may be provided in the vicinity of the boundary between the resin-bonded portion and the bundle of hollow fiber type membranes. Thereby, the module structure is such that dead space such as puddles is minimized, which further enhances the effect of the present invention so as to provide a cartridge-type hollow fiber type membrane module of high reliability.

Further, in the present invention, the cartridge element and the housing may both have a substantially symmetric structure in the longitudinal direction. Furthermore, sealing members required for liquid-tightening may be attached to respective grooves provided in outer peripheries at both ends of the cylindrical case of the cartridge element and the sealing members may contact the housing not by the body (a trunk portion) of the housing, but by an inner surface of the detachable cap structures. Thereby, the assembly and inspection of the module become easy and the retention of the sealing members in predetermined positions can be enhanced. Therefore, it is possible to obtain an inexpensive cartridge-type hollow fiber type membrane module with good sealing properties which is not limited with regard to installation manner and place.

In addition to the above-described constitution, it has been found that the effect of the present invention is enhanced by the following:
(1) The liquid-tight sealing members attached for liquid-tightening to the outer peripheries at both ends of the cylindrical case of the cartridge element are O-rings, and the grooves are rectangular grooves having a rectangular cross section which are formed in the outer peripheries at both ends of the cylindrical case of the cartridge element. The depth of the grooves is 60% to 80% of the thickness of the O-rings and the width of the grooves is 130% to 175% of the thickness of the O-rings.
(2) A plurality of rectangular grooves are formed in each of the outer peripheries at both ends of the cylindrical case of the cartridge element. A plurality of O-rings are provided in correspondence with the rectangular grooves. Distances between adjacent rectangular grooves and distances between the end faces of the cylindrical case and rectangular grooves adjacent thereto are each 60% to 80% of the thickness of the O-rings.
(3) The cap structure is in a substantially cylindrical shape having a taper of 20° to 30° in a longitudinal direction on the inner surface contacting the sealing member so as to have an opening larger toward the housing and smaller toward the cap structure.
(4) The cylindrical case of the cartridge element has a smaller outer diameter in its outer peripheries at both ends, that is, in the portions where the sealing members are attached, than the outer diameter in its trunk portion and also has a tolerance for the outer diameter of its outer peripheries at both ends which is equal to or smaller than half of a tolerance for the outer diameter of its trunk portion.
(5) The cap structure has an annular protrusion on a contact face with the housing. The annular protrusion extends in a length of 2 mm to 5 mm from the contact face toward the housing and engages in an inner surface of an end portion of the housing.

In the cartridge-type hollow fiber type membrane module according to the present invention, the cartridge element in which both end parts of the bundle of hollow fiber type membranes set in the water-permeable cylindrical case are fixed using a resin within the cylindrical case is inserted liquid-tightly in the housing having the detachable cap structure. It may be good enough that the cylindrical case has water passing such that filtrate having passed through the hollow fiber type membranes or an original liquid supplied to the hollow fiber type membranes are able to pass through smoothly. Desirably, the cylindrical case is adapted to have as small resistance to passing liquid as possible so that an effective inter-membrane differential pressure can be applied to the hollow fiber type membranes, so long as the strength of the cylindrical case is not impaired. For example, used is a plastic cylindrical case having a large number of pervious holes to water (liquid-passing bores, preferably circular holes).

Further, both end parts of the bundle of hollow fiber type membranes set in the cylindrical case are handled by the method generally carried out as a method of forming end faces of hollow fiber type membranes of hollow fiber type membrane modules, according to which both end parts are sealed by bonding integrally with the cylindrical case using a hardening resin such as epoxy resin, polyurethane or the like and thereafter the end parts of the hollow fibers are opened by cutting off remote edge parts of the resin-bonded portions at both ends. However, it is preferable to arrange that the resin-bonded portions after cutting process are within the cylindrical case and the outer end faces of the resin-bonded portions are aligned with the end faces of the cylindrical case or, if they comes outside, are within a distance of 10 mm from the end faces of the cylindrical case.

The housing for accommodating the cartridge element has a supply port for supplying liquid by pressure into hollows inside the hollow fibers and a collection port for collecting concentrated liquid respectively at both ends in the longitudinal direction, the trunk portion (body) and the cap structures at both ends in the longitudinal direction which are detachably attached to the trunk portion. The trunk portion of the housing has such a structure that it has at least one outlet port for filtrate having passed through the cartridge element, desirably two outlet ports each provided near both end portions of the trunk portion of the housing. However, it is needless to say that the direction of liquid flow at each of the ports is opposite in the case where filtration is conducted by applying pressure from the outside of the hollow fiber type membranes.

In the cartridge-type hollow fiber type membrane module of the present invention, the cartridge element and the housing both have a longitudinally symmetric structure, the sealing members required for ensuring liquid-tightness are attached to the outer peripheries at both ends of the cylindrical case of the cartridge element, and the housing contacts the sealing members via the inner surface of the detachable cap structures. The longitudinally symmetric structure of both the cartridge element and the housing as well as the way of sealing the cartridge element with the housing plays an important part in attaching and detaching the cartridge element from any optional end of the housing. However, neither the cartridge element or the housing needs to be strictly symmetric as far as the basic function of the module is not affected, for example, with regard to the pervious holes to water formed on the cylindrical case of the cartridge element, indication marks and sampling port.

Further, the sealing members required for ensuring liquid-tightness are attached to the outer peripheries at both ends of the cylindrical case of the cartridge element. Desirably, the outer diameter of the peripheries at both end is smaller than the outer diameter of the trunk portion of the cylindrical case of the cartridge element and also the tolerance of their outer diameter is equal to or smaller than half, preferably one-fifth, of the tolerance of the outer diameter of the trunk portion of the cylindrical case. By providing such structure, it is possible to ensure satisfactory dimension and finishing accuracy by conducting accurate cutting processing only on the outer peripheries at both ends of the cylindrical case of the cartridge element, which contribute directly to a sealing mechanism, even if an inexpensive material poor in working accuracy such as an extruded cylindrical plastic case is used as the trunk portion of the cylindrical case of the cartridge element, which plays no part in the sealing mechanism intrinsically. This is an important aspect of cartridge-type modules with view to producing at low costs cartridge elements, which are thrown away after use unlike the housing.

The outer peripheries at both ends of the cylindrical case whose outer diameter is smaller than that of the trunk part of the cylindrical case of the cartridge element and to which the sealing members are attached may be located inside to the end faces of the cylindrical case with a width such that the sealing members can be attached, but usually the width from the end face of the cylindrical case does not exceed 50 mm.

Further, since the outer diameter of the trunk portion of the cylindrical case of the cartridge element is larger than that of the outer peripheries at both ends of the cylindrical case, the resulting level difference has the function of preventing the cartridge element from engaging with the cap portions of the housing more than required. Accordingly, the width of sealing member attaching surfaces of the outer peripheries at both ends of the cylindrical case of the cartridge element and the level difference from the trunk portion of the cylindrical case should be changed depending upon the shape of the cap structures on the housing side which contact the sealing members.

Also the sealing members attached to the outer peripheries at both ends of the cylindrical case of the cartridge element are preferably O-rings (in an O-ring form). The thickness thereof is decided depending upon the width of the sealing member attaching surfaces, the level difference from the trunk portion of the cylindrical case and the shape of the cap structures on the housing side which contact the sealing members.

The O-rings are fixed in predetermined positions by being engaged in the grooves existing in the outer peripheries at both ends of the cylindrical case of the cartridge element. In order to prevent lying-off and distortion of the O-rings, which will result in sealing failure, upon attachment to the housing, it is preferable that the grooves are rectangular grooves whose depth is 60% to 80% of the thickness of the O-rings and whose width is 130% to 175% of the thickness of the O-rings. Further, for obtaining better sealing properties, it is preferable that a plurality of, at least two of such O-rings are provided in each of the end portions, because a layer of air for sealing can be formed between a pair of O-rings. Preferably, these O-rings are disposed as closely as possible to the end faces of the cartridge element at as small intervals as possible so that as much dead space as possible can be reduced. However, as the distance between the grooves and the end faces and the interval between grooves are shorter, walls supporting the grooves become thinner and there arises the problem that walls chip or crack. Therefore, the distances between the grooves and between the grooves and the end faces of the cylindrical case are preferably established within the range of 60% to 80% with respect to the thickness of the O-rings.

Further, since the sites on the housing side which contact the sealing members attached to the cartridge element are on the inner surface of the detachable cap structures. Accordingly, the inner diameter of the housing body can be set sufficiently larger than the outer diameter of the cartridge element. There is no possibility that the sealing members are damaged from rubbing against the housing body when the cartridge element is attached in or detached from the housing body. Nor is there any trouble in attaching or detaching the cartridge element from an optional end portion of the housing even where the outer diameter of the trunk portion of the cylindrical case of the cartridge element is larger than the sealing members.

Also, the inner surface of the cap structure of the housing which contacts the sealing member attached to the cartridge element is preferably in a cylindrical form having a taper of 20° to 30° in the longitudinal direction so as to have an opening larger to the housing body side and smaller to the cap side. This serves as an apt structure for, when the cylindrical case of the cartridge element is inserted during the assembly of the module, smoothly inserting the cylindrical case until the end face of the cartridge element is engaged to the sealing site thanks to the taper structure without aligning precisely the center of the cartridge element and the center of the cap, especially with a force (10 kgf or less) of such a degree that the sealing member attached to the cylindrical case of the cylindrical cartridge element which does not have a taper structure is not damaged or distorted.

The detachable cap structure of the housing is connected with the housing body with intervention of a sealing member and is rendered liquid-tight by being fixed by pressure with a V-band or a screw. Preferably the cap structure has, on the contact face of the cap structure with the housing body, an annular protrusion extending at least 2 mm to 5 mm from the contact face toward the housing body. Further, an inner surface of the extrusion is preferably continuous with the inner surface (which may have a taper) of the cap defining the sealing face between the inside of the cap and the cartridge element. When the cap structure is fitted by pressure to the housing body, this extrusion can easily guide the housing body and the cap in a normal contact position without strict alignment of the center of the cap to that of the housing body, and is very useful for avoiding damage to and distortion of the sealing member serving to ensure the liquid-tight contact of the housing body with the cap.

As described above, the cartridge-type hollow fiber type membrane module of the present invention allows easy assembly and checking of the module, does not set limitations to how and where to install the module and is inexpensive and excellent in sealing properties. Also with using the housing repeatedly, inexpensive membrane separation processing can be realized.

In another aspect, the present invention can provide a cartridge-type hollow membrane module including a cartridge element in which both end parts of a bundle of hollow fiber type membranes set in a liquid-permeable cylindrical case are fixed with a resin inside the cylindrical case, the cartridge element is inserted liquid-tightly into a housing having detachable cap structures at both ends, wherein the module has a plurality of O-rings as sealing members for ensuring liquid-tightness by being sandwiched between the cartridge element and the housing, the cylindrical case of the cartridge element is provided with a plurality of rectangular grooves in its outer peripheries at both ends for attachment of the O-rings, the depth of the rectangular grooves is 60% to 80% of the thickness of the O-rings, the width of the rectangular grooves is 130% to 175% of the thickness of the O-rings, the distance between adjacent grooves and the distance between an end face of the cylindrical case and a rectangular groove adjacent thereto are 60% to 80% of the thickness of the O-rings, and the tolerance of the outer diameter of the outer peripheries at both ends of the cylindrical case is half of the tolerance of the outer diameter of the trunk portion of the cylindrical case. Thereby, with maintaining a high degree of freedom in assembling the cartridge-type hollow fiber type membrane module, the sealing properties, which might become hard to improve contrarily owing to the degree of freedom, can actually be improved.

### BRIEF DESCRIPTION OF THE DRAWINGS

Fig. 1 is a partly broken side view illustrating one embodiment of a hollow fiber type membrane module of the present invention;
Fig. 2 is a partly broken side view of a cartridge element of the hollow fiber type membrane module of the present invention;
Fig. 3 is a partly broken side view illustrating embodiment 2 of a hollow fiber type membrane module in accordance with the present invention;
Fig. 4 is a partly broken side view of a cartridge element used in the hollow fiber type membrane module of Fig. 3; and
Fig. 5 is a partly broken side view illustrating the relationship of a housing and the cartridge element used in the hollow fiber type membrane module of Fig. 3.

### BEST MODE OF CARRYING OUT THE INVENTION

The invention is now described in detail by way of embodiments shown in the figures, which are not intended to limit the scope of the invention.

### EMBODIMENT 1

Next, one embodiment of the cartridge-type hollow fiber type membrane module of the present invention is described with reference to the accompanying figures. However, the present invention is not limited to this embodiment.

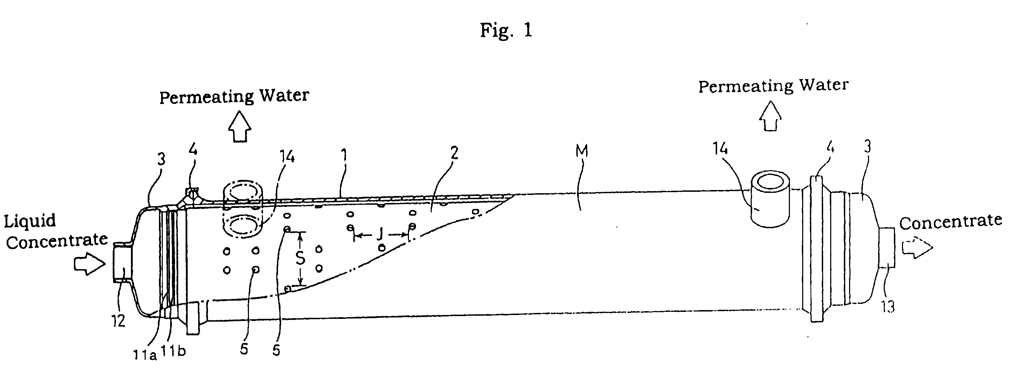

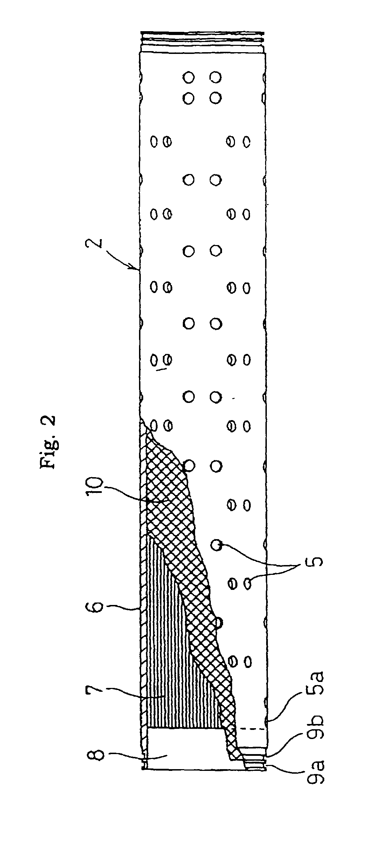

Fig. 1 is a partly broken side view illustrating one embodiment of the hollow fiber type membrane module of the present invention, and Fig. 2 is a partly broken side view of a cartridge element used in the embodiment.

In Figs. 1 and 2, a hollow fiber type membrane module M is composed mainly of a cylindrical body 1 (made of metal) constituting the housing, metallic caps 3, 3 for closing openings at both ends of the body, a hollow fiber type membrane cartridge element 2 set in the housing, V band couplings 4, 4 for fastening tight the body 1 and the metallic caps 3, 3 at both ends in a combined state and liquid-tightly sealing the inside of the housing.

Especially referring to Fig. 2, the hollow fiber type membrane cartridge element 2 includes a cylindrical case 6 with a large number of pervious holes 5, 5, ... to water for passing liquid formed symmetrically in an axial direction, a bundle 7 of hollow fiber type membranes bundled in a great number which is set in the case, and bonded end parts 8 where both ends of the hollow fiber type membrane bundle 7 and the cylindrical case 6 are integrally sealed by bonding with use of an epoxy resin or polyurethane and the bonded portions 8 at both ends are partially cut off to open end parts of the hollow fibers. In addition, reference numerals 9a and 9b denote two grooves formed on the outer periphery at both ends of the cylindrical case 6, and reference numeral 10 denote a cylindrical net intervening between the cylindrical case 6 and the hollow fiber type membrane bundle 7.

The hollow fiber type membrane module of Fig. 1 represents the case of being used in an inner-pressure filtration mode. Reference numerals 11a and 11b denote O-rings engaged in the grooves 9a and 9b (see Fig. 2) formed on the cylindrical case 6 of the cartridge element 2. The O-rings contact the inner surface of the cap 3 by pressure thereby to provide liquid-tight separation of the inside of the module into an original liquid side and a filtrate side via the hollow fiber type membrane bundle 7. Reference numeral 12 denotes an original liquid inlet, 13 denotes a concentrated liquid outlet, and 14, 14 denote filtrates outlet ports as the fluid inlet/outlet. Since the caps at both ends of the housing are of separate-type and the cartridge element is symmetric in the axial direction, the cartridge element 2 can be detached from either direction.

As shown in Figs. 1 and 2, out of a large number of the pervious holes 5, 5, ... to water of the cartridge element 2, pervious holes to water 5a at both ends are so arranged that their outermost opening edges are on the inside edges of the resin-bonded portions 8, i.e., they are located in the vicinity of the boundary between the resin-bonded portions 8 and the hollow fiber type membrane bundle 7. Therefore, provided is a module structure which allows dead space such as puddles to be reduced to the minimum. Further, intervals of the pervious holes to water of the cylindrical case 6 of the cartridge element 2 in the circumferential direction and in the axial direction (a longer interval of holes in the circumferential direction) are each set to be 1.2 or more times larger than the inner diameter of the filtrate outlet port 14 as the fluid inlet/outlet on the circumferential face of the housing. Thereby, when the cartridge element 2 is set by insertion within the cylindrical housing, the pervious holes to water of the cartridge element 2 are not permitted to come near the point immediately under the filtrate outlet port 14 on the circumferential face of the cylindrical housing by rotating the cartridge element 2. Here, both ends of the cartridge element 2 have positional indication marks (not shown) indicating the centers of the intervals of the pervious holes 5, 5 to water in the circumferential direction and positional indication marks nearer to the ends than the pervious holes to water located nearest to the ends. Accordingly, from whichever direction of the cylindrical housing the cartridge element 2 may be attached and detached, the indication marks are suitable for setting the fluid inlet/outlet ports 14 of the cylindrical housing in position.

Thus, a portion of the cartridge element where the pervious holes to water are not formed is located immediately under the fluid inlet/outlet port 14 on the circumferential face of the cylindrical housing, and thereby serves as a hollow fiber protection plate which prevents damage on hollow fibers from being caused by oscillation due to liquid flow from/toward the fluid inlet/outlet port of the housing. For example, the diameter of the pervious holes to water 5 is set 15 mm, the intervals J of the pervious holes to water in the axial direction are set 100 mm, the intervals S between the pervious holes to water in the circumferential direction are set 80 mm (longer intervals in the circumferential direction), and the inner diameter of the permeate outlet ports 14 is set 60 mm. The intervals S of the pervious holes to water in the circumferential direction is set 1.2 or more times larger than the inner diameter of the filtrate outlet port 14. The centers of the fluid outlet ports 14 are situated substantially at the centers of the intervals of pervious holes to water in the axial and circumferential directions. Therefore, the pervious holes 5 to water (their opening edges) are spaced from the centers of the fluid outlet/inlet ports 14 a distance 0.6 or more times longer than the inner diameter of the fluid inlet/outlet ports 14 (see Fig. 1).

As described above, according to Embodiment 1, the portion of the cartridge element where the pervious holes to water are not opened acts as a hollow fiber protection plate for protecting the hollow fiber type membranes against the flow of liquid from/toward the fluid inlet/outlet port by being located right under the fluid inlet/outlet port on the circumferential face of the cylindrical housing. Also, the module is adapted to have a structure such that, of said many pervious holes to water of the cartridge element, the pervious holes to water at both ends are positioned near the boundary between the resin-bonded portion and the hollow fiber bundle and thus dead space such as puddles is minimized. Thereby, generation and growth of bacteria is prevented. To sum up, it is possible to provide an inexpensive, reliable cartridge-type hollow fiber type membrane module which has a reduced number of components used for protecting hollow fibers and has a simplified structure and at the same time whose production is facilitated.

### EMBODIMENT 2

Next, Embodiment 2 of a hollow fiber type membrane module in accordance with the present invention is explained with reference to the accompanying figures.

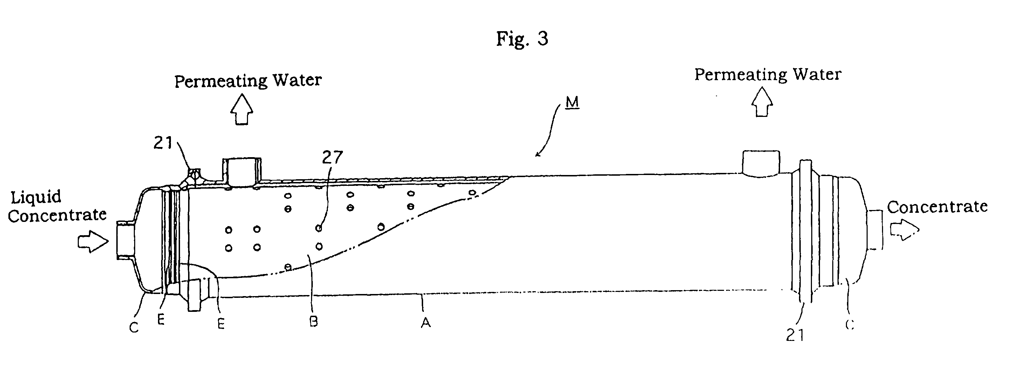

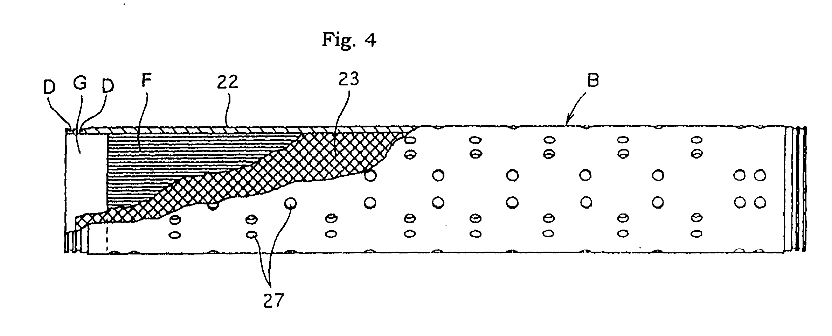

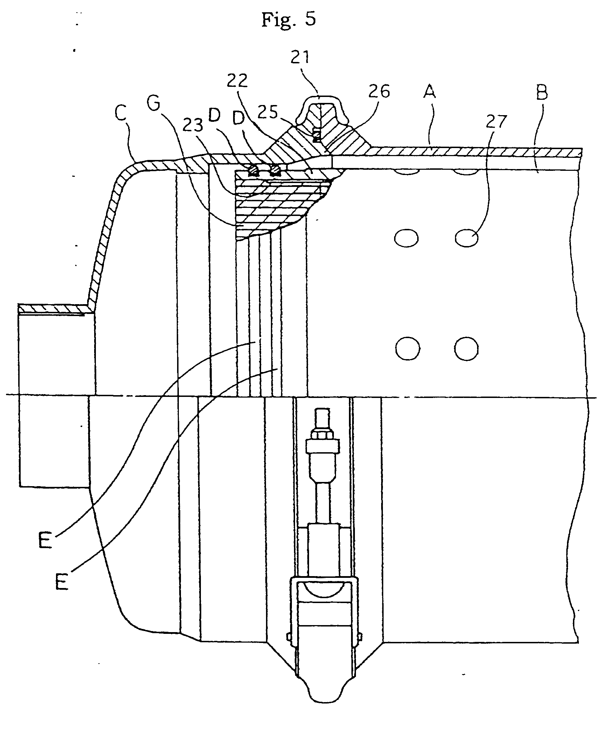

Fig. 3 is a partly broken side view illustrating Embodiment 2 of a hollow fiber type membrane module in accordance with the present invention. Fig. 4 is a partly broken side view of a cartridge element used in the hollow fiber type membrane module of Fig. 3. Fig. 5 is a partly broken side view illustrating the relationship of a housing and the cartridge element used in the hollow fiber type membrane module of Fig. 3.

First, the hollow fiber type membrane module of Fig. 3 represents one used in the inner-pressure filtration mode. In Fig. 3, the hollow fiber type membrane module M is composed mainly of a cylindrical metallic housing body A constituting the housing, metallic caps 3, 3 as cap structures and a hollow fiber type membrane cartridge element B set removably in the housing. The module is constructed by inserting the hollow fiber type membrane cartridge element B in the housing body A, fastening both ends (opening portions) of the housing body A with the caps C, C and sealing liquid-tightly using V band couplings 21, 21. Here, the cartridge element B and the housing are each substantially symmetric in a longitudinal direction and especially, the caps C, C at both ends are of separate type. Accordingly, the cartridge element B can be attached and detached from either direction of the housing body A.

Next, as shown in Figs. 3 to 4, the cartridge element B is constructed by accommodating, in a cylindrical plastic case 22, a fiber bundle F of a plurality of hollow fiber type membranes wrapped in a net 23, sealing both end parts of the bundle integrally with the cylindrical case 2 and the net 23 by boding with use of a resin such as epoxy resin or polyurethane and cutting off a part of resin-bonded portions G at both ends to open end parts of the hollow fibers. Incidentally, reference numeral 27 denotes a large number of pervious holes to water formed on the cylindrical case B.

Here, as the cylindrical case 22 of the cartridge element B, used is a commercially available cylindrical plastic case formed by extrusion which has a diameter of 165 mm ± 0.5 mm tolerance and needs work only in a few places. Only both end portions thereof are precisely processed to have a diameter of 163.4 mm ± 0.05 mm tolerance and rectangular grooves D, D are provided as grooves for receiving O-rings for sealing treated liquid, while resulting steps in the end portions can be used for preventing the cylindrical case from getting into the cap.

Also, for sealing both end portions of the cylindrical case 22 of the cartridge element B, double O-rings E, E (of 3.53 mm thickness in a free state and of 159.05 mm diameter in the same state) are used in correspondence with the rectangular grooves D, D. Here, by setting the width of the rectangular grooves D, D receiving the O-rings to 4.7 to 4.9 mm (133 to 139 % of the thickness of the O-rings used), the depth thereof to 2.23 to 2.43 mm (63 to 69 % of the thickness of the O-rings), the interval between the grooves to 2 mm (57 % of the thickness of the O-rings) and the interval between end faces of the cylindrical case 22 and rectangular grooves D, D adjacent to said end faces to 3 mm (85 % of the thickness of the O-rings), a lying-off phenomenon of the O-rings E, E is prevented when the inner pressure is changed during use of the module and when the cartridge element B is replaced. Also, by fastening the opening portions of the housing from both sides with the caps C, C after inserting the cartridge element B into the housing, the inner surfaces of the caps are contacted in a pressured state with the O-rings E, E attached to the cylindrical case of the cartridge element B. Thereby, the original liquid side where the original liquid flows in from the cap C and flows out of the cap C via the hollow fiber type membrane bundle F is separated liquid-tightly from the permeate side where the permeate having passed through the hollow fiber type membranes comes out of the pervious holes to water 27 of the cylindrical case 22 and flows out of the liquid inlet/outlet port of the housing body A.

Next, in Fig. 5, the cap C is provided with a taper of 10° to 20° (denoted by T in Fig. 5) on an inner surface on a region which receives the cylindrical case 22 of the cartridge element B so as to have an opening which is wider to a housing body A side and narrower to a cap C side. Accordingly, the cylindrical case 22 of the cartridge element B can easily be inserted in the cap C by a force which does not cause a twist in the O-rings E, E on the cylindrical case 22, i.e., a force of 10 kgf or less. Further, each of the caps C is provided with an annular protrusion 26 on a face contacting the housing body A, the annular protrusion extending 3 mm towards the housing body. Accordingly, when the housing body A is assembled with the cap C, the annular protrusion 26 is fitted in the internal circumference of the housing body A thereby to avoid displacement and enable an easy positioning in an upright or lateral state.

As described above, according to Embodiment 2, the cap portion and the cartridge element can be detached from either end of the housing. Therefore, it is possible to provide a very cheap cartridge-type hollow fiber type membrane module because there are not limitations concerning where and how to place the module or for what apparatus the module is installed, which makes the module easy to handle, and inexpensive materials can be used for the cartridge element and also because the housing can be used repeatedly. Further, it is possible to provide a high reliability and durability for the cylindrical case of the cartridge element and the cap portion of the housing and for the sealing of the housing body and the cap portion, and to provide a simple, accurate workability at attaching and detaching the module.

## Claims

1. A hollow fiber type membrane module comprising:
a cartridge element in which a bundle of hollow fiber type membranes is set in a cylindrical case with a plurality of the pervious holes to water and both end parts of the bundle of hollow fiber type membranes are fixed with a bonding resin within the cylindrical case, and
a cylindrical housing for setting therein the cartridge element liquid-tightly, the housing having a detachable cap structure for replacement of the cartridge element and having a fluid outlet/inlet port at least at one position,
the pervious holes to water in the cartridge element are positioned not directly beneath but apart from an inner surface of the fluid outlet/inlet port of the cylindrical housing.

2. A hollow fiber type membrane module according to claim 1, wherein the pervious holes to water in the cartridge element have a distance therebetween in a circumferential direction and in an axial direction which is 1.2 or more times larger than the inner diameter of the fluid outlet/inlet port, and a pervious hole to water of the cartridge element which is the nearest to the center of the liquid outlet/inlet port of the cylindrical housing is positioned apart from said center at a distance 0.6 or more times larger than the inner diameter of the fluid outlet/inlet port of the cylindrical housing.

3. A hollow fiber type membrane module according to claim 1, wherein the pervious holes to water in the cartridge element are arranged in pairs of adjacent pervious holes to water in a circumferential direction; a distance between the pervious holes to water in an axial direction and a distance between a pair of pervious holes to water and another pair of pervious holes to water adjacent thereto in the circumferential direction are each 1.2 or more times larger than the inner diameter of the fluid outlet/inlet port; and a pervious hole to water of the cartridge element which is the nearest to the center of the liquid outlet/inlet port of the cylindrical housing is positioned apart from said center by a distance 0.6 or more times larger than the inner diameter of the fluid outlet/inlet port.

4. A hollow fiber type membrane module according to claim 2 or 3, wherein the pervious holes to water in the cartridge element are formed on the cylindrical case symmetrically in the axial direction.

5. A hollow fiber type membrane module according to claim 1, wherein an outermost pervious hole to water in the cartridge element in an axial direction is so formed that its outermost opening edge is located at an inside edge of a resin-bonded portion of the cartridge element.

6. A hollow fiber type membrane module according to claim 1, wherein at least one end portion of the cartridge element has a position indication mark for positioning with respect to the fluid outlet/inlet port of the cylindrical housing, the position indication mark being, in a circumferential direction, almost at the center of the interval between pervious holes to water or pairs of pervious holes to water which are the nearest to the end part and, in an axial direction, nearer to the end part than a pervious hole to water which is the nearest to the end part.

7. A hollow fiber type membrane module according to claim 1, wherein both the cartridge element and the housing have a substantially symmetric structure in a longitudinal direction, both end portions of the cylindrical case of the cartridge element are located adjacently to inner surfaces of the cap structures and have grooves in outer peripheries of the end portions, sealing members are attached to the grooves for a liquid-tight connection with the inner surfaces of the cap structures, the sealing members are O-rings, and the grooves are rectangular grooves having a depth of 60 to 80 % of the thickness of the O-rings and a width of 130 to 175 % of the thickness of the O-rings.

8. A hollow fiber type membrane module according to claim 7, wherein a plurality of rectangular grooves are formed in the outer periphery of each of the end portions of the cylindrical case of the cartridge element, a plurality of O-rings are provided in correspondence with the rectangular grooves, and a distance between adjacent rectangular grooves and a distance between an end face of the cylindrical case and a rectangular groove adjacent to said end face are 60% to 80 % of the thickness of the O-ring.

9. A hollow fiber type membrane module according to any one of claims 7 and 8, wherein the cap structure is in a substantially cylindrical shape having a taper of 20° to 30° with respect to a longitudinal direction on the inner surface thereof contacting the sealing member so that the cylindrical shape has an opening which is wider toward the housing and narrower toward the cap structure.

10. A hollow fiber type membrane module according to claim 7, wherein, in the cylindrical case of the cartridge element, the outer diameter at both ends thereof is smaller than the outer diameter of a trunk portion of the cylindrical case, and tolerance of the outer diameter at both ends is equal to or smaller than half of that of the outer diameter of the trunk portion.

11. A hollow fiber type membrane module according to claim 7, wherein the cap structure has an annular protrusion on a contact face contacting the housing, the annular protrusion projecting at least 2 to 5 mm from the contact face toward the housing and fitting in an inner periphery of an end portion of the housing.
